# FASCICULE DE BREVET EUROPEEN

(11) **EP 2 806 292 B1**
(45) Date de publication et mention de la délivrance du brevet: **13.05.2020**
(21) Numéro de dépôt: 14164737.0
(22) Date de dépôt: 15.04.2014
(51) Int. Cl.: G01V 8/10

(54) **Réflecteur pour dispositif de détection à mode réflex**
Reflektor für eine Reflex-Modus-Sensorvorrichtung
Reflector used in a reflex mode detection device

(30) Priorité: 21.05.2013 FR 1354551
(43) Date de publication de la demande: 26.11.2014
(73) Titulaire: Schneider Electric Industries SAS, 92500 Rueil-Malmaison (FR)
(72) Inventeur: Roger, Mireille, 16600 Ruelle-sur-Touvre (FR); Gressier, Gilles, 16730 Linars (FR)
(74) Mandataire: Dufresne, Thierry

(56) Documents cités:
- EP-A1- 1 850 057
- DE-A1- 2 516 875
- US-A- 5 554 972
- US-A1- 2001 045 512
- US-A1- 2004 042 010
- US-A1- 2007 297 042

## Description

### Domaine technique de l'invention

La présente invention se rapporte à un réflecteur employé dans un dispositif de détection à mode reflex et au dispositif de détection employant ledit réflecteur.

### Etat de la technique

De manière connue, un dispositif de détection à mode réflex comporte un détecteur de type photoélectrique et un réflecteur. Le détecteur émet un signal sous forme d'un faisceau lumineux qui est réfléchi par le réflecteur. Si le faisceau lumineux n'est pas interrompu, celui-ci est réceptionné par le détecteur. Cet aller-retour du faisceau lumineux permet de détecter la présence d'un objet. La présence d'un signal de retour indique qu'aucun objet ne se trouve entre le détecteur et le réflecteur. L'absence du signal de retour permet au détecteur de conclure à la présence d'un objet ayant interrompu le faisceau.

Pour pouvoir fonctionner, le détecteur et le réflecteur doivent être bien alignés. Cependant, lors de l'installation, l'opérateur ne dispose d'aucun moyen simple lui permettant de s'assurer que le détecteur et le réflecteur sont bien alignés.

En effet, le détecteur et le réflecteur sont souvent distants de plusieurs mètres et le faisceau lumineux en devient plus ou moins visible. En outre, les détecteurs photoélectriques émettent un signal lumineux soit rouge soit infrarouge. Dans ce dernier cas, le faisceau est invisible.

La solution technique la plus utilisée à ce jour consiste en l'ajout d'un faisceau laser rouge, émis par le détecteur. Cette émission laser qui a pour seule fonction de matérialiser la direction de détection du détecteur n'est pas neutre en termes d'architecture électronique et de coût de réalisation.

Une autre solution consiste en l'implémentation d'une interface homme-machine dédiée à l'alignement sur le détecteur photoélectrique en vue d'indiquer le niveau de réception du faisceau lumineux de retour. Cette solution est coûteuse et est particulièrement encombrante pour le détecteur qui accueille une telle interface.

Le document US 2004/0042010 décrit une solution d'alignement d'un réflecteur.

Le but de l'invention est de proposer un réflecteur permettant à l'installateur de faciliter son alignement par rapport au détecteur.

### Exposé de l'invention

Ce but est atteint par un réflecteur pour dispositif de détection à mode réflex, ledit réflecteur étant destiné à être positionné dans l'alignement d'un détecteur et comprenant une zone réfléchissante pour réfléchir un faisceau lumineux de manière à le renvoyer vers le détecteur, le réflecteur étant agencé pour remplir :
- une fonction de signalisation à l'aide d'une interface de signalisation, ladite interface de signalisation étant agencée pour indiquer un état d'alignement de la zone réfléchissante du réflecteur par rapport à l'émetteur,
- une fonction de détection de manière à détecter la présence du faisceau lumineux contre le réflecteur, la fonction de détection étant remplie par des photorécepteurs agencés sur une première zone périphérique à la zone réfléchissante,
- une fonction d'interprétation à l'aide d'une unité d'interprétation, ladite unité d'interprétation étant agencée pour agir sur l'interface de signalisation en vue d'indiquer l'état d'alignement,
- une fonction d'alimentation autonome en énergie électrique, de manière à alimenter en énergie électrique l'interface de signalisation et l'unité d'interprétation, la fonction d'alimentation étant remplie par des cellules photovoltaïques sensibles à la lumière ambiante réparties sur une deuxième zone périphérique à la première zone.

Avantageusement, l'interface de signalisation comporte des voyants de visualisation.

L'invention concerne également un dispositif de détection à mode réflex comprenant un détecteur et un réflecteur, ledit réflecteur étant tel que défini ci-dessus.

### Brève description des figures

D'autres caractéristiques et avantages vont apparaître dans la description détaillée qui suit faite en regard des dessins annexés dans lesquels :
- la figure 1 illustre le principe de fonctionnement d'un dispositif de détection à mode réflex,
- la figure 2 représente, de manière schématique, le réflecteur de l'invention, selon un premier mode de réalisation,
- la figure 3 représente, de manière schématique, un réflecteur qui ne fait pas partie de l'invention.

### Description détaillée d'au moins un mode de réalisation

Un dispositif de détection fonctionnant en mode réflex comporte un détecteur photoélectrique 1 et un réflecteur 2. Le détecteur photoélectrique 1 comporte un émetteur agencé pour émettre un faisceau lumineux F1 et un récepteur agencé pour recevoir un faisceau lumineux F2 de retour réfléchi par le réflecteur 2, si le faisceau lumineux F1 n'est pas interrompu.

Pour réfléchir le faisceau lumineux F1, le réflecteur 2 comporte une zone réfléchissante Z qui doit être positionnée dans l'alignement de l'émetteur du détecteur 1. Cependant, l'alignement n'est pas toujours aisé à obtenir.

Selon l'invention, le réflecteur 2 comporte :
- une fonction de signalisation,
- une fonction d'alimentation,
- une fonction de détection,
- une fonction d'interprétation.

Selon l'invention, la fonction de signalisation est remplie par une interface de signalisation 20 permettant à l'installateur de savoir si la zone réfléchissante Z du réflecteur est alignée ou non-alignée par rapport à l'émetteur du détecteur.

L'interface de signalisation comporte par exemple un ou plusieurs voyants de visualisation 200 dont la commande à l'allumage ou à l'extinction permet de signaler à l'installateur l'état d'alignement de la zone réfléchissante Z du réflecteur 2 par rapport à l'émetteur du détecteur 1. En lisant l'état des voyants 200, l'installateur pourra ainsi par exemple savoir si le réflecteur 2 est bien aligné, non aligné ou partiellement aligné. Bien entendu, d'autres interfaces de signalisation, visuelles, sonores ou autres, pourraient être envisagées.

La fonction d'alimentation permet au réflecteur de remplir la fonction de signalisation, la fonction d'interprétation et éventuellement la fonction de détection en alimentant ses composants nécessaires pour remplir ces fonctions.

La fonction d'alimentation est remplie par des cellules photovoltaïques 210, 211, 212 réparties au moins en partie sur la surface du réflecteur 2. Les cellules photovoltaïques convertissent l'énergie lumineuse en énergie électrique. Cette énergie lumineuse provient de l'énergie lumineuse ambiante et/ou de l'énergie lumineuse générée par le faisceau lumineux F1 émis par l'émetteur du détecteur photoélectrique. Le faisceau lumineux F1 est préférentiellement à lumière rouge ou infrarouge.

La fonction de détection permet au réflecteur de détecter la présence du faisceau lumineux F1 sur sa surface.

La fonction d'interprétation permet au réflecteur de déterminer l'état d'alignement du faisceau lumineux venant ou non sur sa surface. Cette fonction est remplie par une unité d'interprétation 22, agencée pour agir sur l'interface de signalisation 20 en fonction de l'état d'alignement du faisceau lumineux F1 par rapport au réflecteur 2.

Les différentes fonctions sont remplies par des composants électroniques connectés préférentiellement sur une même carte électronique intégrée dans le boîtier du réflecteur 2. Dans une variante de réalisation, la carte électronique est agencée dans un module indépendant sur lequel vient se positionner la zone réfléchissante Z du réflecteur 2. Une fois l'alignement de la zone réfléchissante Z avec l'émetteur réalisé, ce module est retiré.

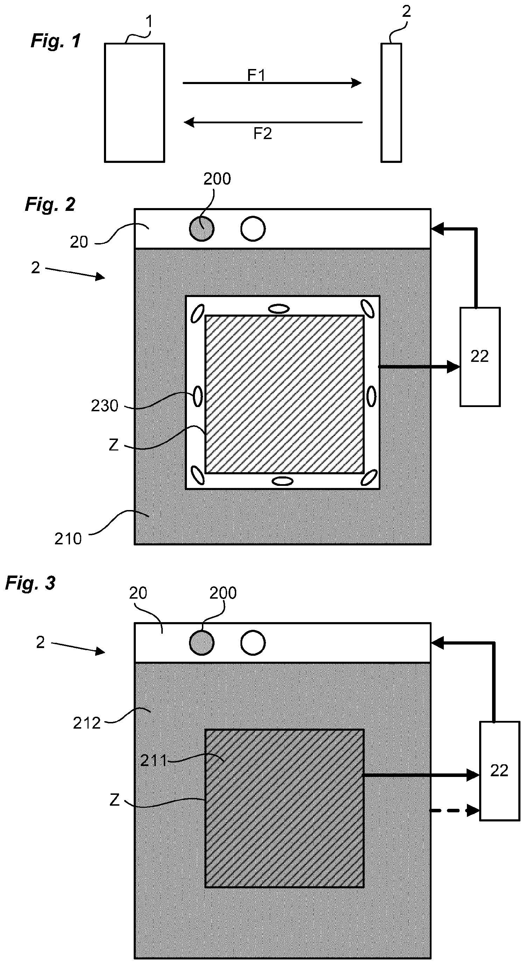

Dans un premier mode de réalisation représenté sur la figure 2, la fonction d'alimentation est remplie par des cellules photovoltaïques 210 sensibles à la lumière ambiante. Elles permettent de capter l'énergie lumineuse ambiante nécessaire à l'alimentation de l'unité d'interprétation 22 et de l'interface de signalisation 20 et à la réalisation de la fonction de détection.

Dans ce premier mode réalisation, la fonction de détection est remplie par des photorécepteurs 230, par exemple des photodiodes et/ou des phototransistors, répartis sur une première zone située autour de la zone réfléchissante Z. Les cellules photovoltaïques 210 sont pour leur part disposées dans une deuxième zone qui est périphérique à la zone accueillant les photorécepteurs 230.

Selon un exemple représenté sur la figure 3, ne faisant pas partie de l'invention, la fonction d'alimentation et la fonction de détection sont remplies par des cellules photovoltaïques 211 positionnées sur une première zone correspondant à la zone réfléchissante Z et par des cellules photovoltaïques 212 positionnées sur une deuxième zone, qui est périphérique à la zone réfléchissante Z.

Ces cellules photovoltaïques 211, 212 sont ainsi choisies sensibles à la lumière rouge ou infrarouge du faisceau lumineux émis par l'émetteur. Elles permettent ainsi de détecter la présence du faisceau et d'alimenter l'unité d'interprétation 22 et l'interface de signalisation 20 lorsque le faisceau lumineux est bien aligné. Cet agencement dans lequel des cellules photovoltaïques sensibles à la lumière du faisceau lumineux émis sont réparties sur les deux zones, présente notamment l'avantage de pouvoir détecter la présence du faisceau lumineux F1 quel que soit le diamètre du faisceau.

En variante de réalisation, les cellules photovoltaïques 212 employées en deuxième zone ne remplissent pas la fonction de détection mais uniquement une fonction d'alimentation. Pour cela, elles sont choisies sensibles à la lumière ambiante.

Dans l'exemple ci-dessus, l'unité d'interprétation 22 analyse l'énergie électrique générée par les cellules photovoltaïques sensibles à la lumière rouge ou infrarouge positionnées en première zone et éventuellement en deuxième zone. L'unité d'interprétation 22 détermine ensuite si le faisceau lumineux F1 est bien dirigé ou non vers la zone réfléchissante Z. La charge relative de condensateurs associés à chaque cellule photovoltaïque ou ensemble de cellules photovoltaïques sensibles à la lumière rouge ou infrarouge, permet par exemple de discerner la quantité d'énergie lumineuse récupérée et ainsi de localiser le faisceau lumineux F1 provenant de l'émetteur sur la zone réfléchissante Z.

## Revendications

1. Réflecteur pour dispositif de détection à mode réflex, ledit réflecteur étant destiné à être positionné dans l'alignement d'un détecteur et comprenant une zone réfléchissante (Z) pour réfléchir un faisceau lumineux (F1) de manière à le renvoyer vers le détecteur (1), le réflecteur (2) étant agencé pour remplir :
- une fonction de signalisation à l'aide d'une interface de signalisation (20), ladite interface de signalisation (20) étant agencée pour indiquer un état d'alignement de la zone réfléchissante (Z) du réflecteur (2) par rapport à l'émetteur,
- une fonction de détection de manière à détecter la présence du faisceau lumineux contre le réflecteur,
- une fonction d'interprétation à l'aide d'une unité d'interprétation (22), ladite unité d'interprétation (22) étant agencée pour agir sur l'interface de signalisation en vue d'indiquer l'état d'alignement,
- une fonction d'alimentation autonome en énergie électrique, de manière à alimenter en énergie électrique l'interface de signalisation (20) et l'unité d'interprétation (22),
**caractérisé en ce que**
la fonction de détection est remplie par des photorécepteurs (230) agencés sur une première zone périphérique à la zone réfléchissante (Z), et la fonction d'alimentation est remplie par des cellules photovoltaïques (210) sensibles à la lumière ambiante réparties sur une deuxième zone périphérique à la première zone.

2. Réflecteur selon la revendication 1, **caractérisé en ce que** l'interface de signalisation comporte des voyants de visualisation (200).

3. Dispositif de détection à mode réflex comprenant un détecteur (1) et un réflecteur (2), ledit dispositif étant **caractérisé en ce que** le réflecteur est tel que défini dans l'une des revendications 1 à 2.

## Patentansprüche

1. Reflektor für eine Reflex-Modus-Sensorvorrichtung, wobei der Reflektor dazu bestimmt ist, in der Ausrichtung eines Detektors positioniert zu werden, und einen reflektierenden Bereich (Z) beinhaltet, um einen Lichtstrahl (F1) zu reflektieren, um ihn zu dem Detektor (1) zurückzuschicken,
wobei der Reflektor (2) angeordnet ist, um Folgendes zu erfüllen:
- eine Signalisierungsfunktion mit Hilfe einer Signalisierungsschnittstelle (20), wobei die Signalisierungsschnittstelle (20) angeordnet ist, um einen Ausrichtungszustand des reflektierenden Bereichs (Z) des Reflektors (2) mit Bezug auf den Sender anzuzeigen,
- eine Detektionsfunktion, um das Vorhandensein des Lichtstrahls gegen den Reflektor zu detektieren,
- eine Interpretationsfunktion mit Hilfe einer Interpretationseinheit (22), wobei die Interpretationseinheit (22) angeordnet ist, um auf die Signalisierungsschnittstelle einzuwirken, damit diese den Ausrichtungszustand anzeigt,
- eine autonome Stromversorgungsfunktion, um die Signalisierungsschnittstelle (20) und die Interpretationseinheit (22) mit Strom zu versorgen,
**dadurch gekennzeichnet, dass**
die Detektionsfunktion durch Photoempfänger (230) erfüllt wird, die in einem ersten Bereich, der den reflektierenden Bereich (Z) umgibt, angeordnet sind, und die Versorgungsfunktion durch umgebungslichtempfindliche photovoltaische Zellen (210) erfüllt wird, die über einen zweiten Bereich, der den ersten Bereich umgibt, verteilt sind.

2. Reflektor nach Anspruch 1, **dadurch gekennzeichnet, dass** die Signalisierungsschnittstelle Leuchtanzeigen (200) zur Visualisierung umfasst.

3. Reflex-Modus-Sensorvorrichtung, die einen Detektor (1) und einen Reflektor (2) beinhaltet, wobei die Vorrichtung **dadurch gekennzeichnet ist, dass** der Reflektor der Definition nach einem der Ansprüche 1 bis 2 entspricht.

## Claims

1. Reflector used in a reflex mode detection device, said reflector being intended to be positioned in alignment with a detector and comprising a reflective region (Z) for reflecting a light beam (F1) so as to send it back towards the detector (1),
the reflector (2) being arranged to fulfil:
- a signalling function using a signalling interface (20), said signalling interface (20) being arranged to indicate a state of alignment of the reflective region (Z) of the reflector (2) with respect to the emitter,
- a detection function so as to detect the presence of the light beam against the reflector,
- an interpretation function using an interpretation unit (22), said interpretation unit (22) being arranged to operate on the signalling interface with the aim of indicating the state of alignment,
- a power supply function with autonomous electric power, so as to supply electric power to the signalling interface (20) and the interpretation unit (22),
**characterized in that** the detection function is fulfilled by photoreceptors (230) arranged over a first region peripheral to the reflective region (Z), and the power supply function is fulfilled by photovoltaic cells (210) sensitive to ambient light, distributed over a second region peripheral to the first region.

2. Reflector according to Claim 1, **characterized in that** the signalling interface includes light indicators (200).

3. Reflex mode detection device comprising a detector (1) and a reflector (2), said device being **characterized in that** the reflector is as defined in one of Claims 1 to 2.
